# EUROPEAN PATENT APPLICATION

(11) **EP 2 528 188 A1**
(43) Date of publication of application: **28.11.2012**
(21) Application number: 12167625.8
(22) Date of filing: 11.05.2012
(51) Int. Cl.: H02J 7/00, H02J 7/35, H02J 9/00

(54) **Rechargeable battery power supply starter and cell balancing apparatus**

(30) Priority: 26.05.2011 JP 2011117521
(71) Applicant: Kabushiki Kaisha Toyota Jidoshokki, Kariya-shi, Aichi 448-8671 (JP)
(72) Inventor: Kuraishi, Mamoru, Kariya-shi, Aichi 448-8671 (JP)
(74) Representative: TBK

(57) **Abstract**

When a voltage applied to a first capacitor (6) connected to an output of a power generator (4) in parallel is equal to or larger than a threshold, a starter signal output from a monitoring circuit (10) to a control circuit (14) is set from a low level to a high level. The control circuit (14) self-starts, and a first switch (8) arranged between the power generator (4) and a cell balancing circuit (13) is turned ON. Electric power for equalizing an output voltage of each of a plurality of rechargeable batteries of a battery pack (3) is supplied from the power generator (4) to the battery pack (3) via the cell balancing circuit (13).

## Description

### FIELD

The embodiments described in this application are related to a rechargeable battery power supply starter that starts a circuit for supplying electric power to a rechargeable battery, and a cell balancing apparatus that includes the rechargeable battery power supply starter.

### BACKGROUND

Some rechargeable batteries that supply electric power to motors for driving, which are mounted on vehicles such as plug-in hybrid vehicles or electrically-powered vehicles, perform a charging process when the rechargeable battery is not being used, e.g., when the vehicle is parked (for example, see Japanese Laid-open Patent Publication No. 2009-303308).

Apart from commercial power sources, photovoltaic power generators mounted on vehicles may be used as a power supply for supplying electric power to a rechargeable battery to charge the rechargeable battery (for example, see Japanese Laid-open Patent Publication No. 63-124732 and Japanese Laid-open Patent Publication No. 2010-195065).

However, the output of the photovoltaic power generators may become unstable due to the weather. For this reason, if a power generator with an unstable output such as a photovoltaic power generator is used as a power supply to rechargeable batteries, it is difficult to supply stable electric power to the rechargeable batteries.

### SUMMARY

It is an object in one aspect of the present invention to provide a rechargeable battery power supply starter and a cell balancing apparatus that are capable of supplying stable electric power to a rechargeable battery when electric power is supplied to a rechargeable battery by using a power generator whose output is unstable.

A rechargeable battery power supply starter according to the present invention controls a power generator to supply electric power to a cell balancing circuit used to equalize an output voltage of each of a plurality of rechargeable batteries provided for a battery pack, and the rechargeable battery power supply starter includes: a first capacitor connected to an output of the power generator in parallel; a first switch arranged between the power generator and the cell balancing circuit; a first monitoring circuit to output a first starter signal when a voltage applied to the first capacitor is equal to or larger than a threshold; and a control circuit to control ON and OFF of the first switch, wherein the control circuit self-starts upon receiving the first starter signal to turn on the first switch, and controls the power generator to supply electric power to be used by the cell balancing circuit for equalizing an output voltage of each of the plurality of rechargeable batteries.

As a result, it becomes possible to turn ON the first switch when the voltage applied to the first capacitor becomes equal to or larger than a stable output voltage of a power generator, and thus it becomes possible to supply stable electric power from a power generator to a battery pack via a cell balancing circuit. Accordingly, for example, even if a photovoltaic power generator whose output power is unstable is used as a power generator, it is possible to supply stable electric power to the battery pack.

### BRIEF DESCRIPTION OF DRAWINGS

FIG. 1 is a diagram illustrating a rechargeable battery power supply starter and a cell balancing apparatus according to an embodiment of the present invention.

FIG. 2 is a diagram illustrating an example of a monitoring circuit or a balancing circuit according to the present embodiment.

FIG. 3 is a diagram schematically illustrating an example of an ON and OFF timing chart of switches.

FIG. 4 is a diagram schematically illustrating another example of an ON and OFF timing chart of switches.

### DESCRIPTION OF EMBODIMENTS

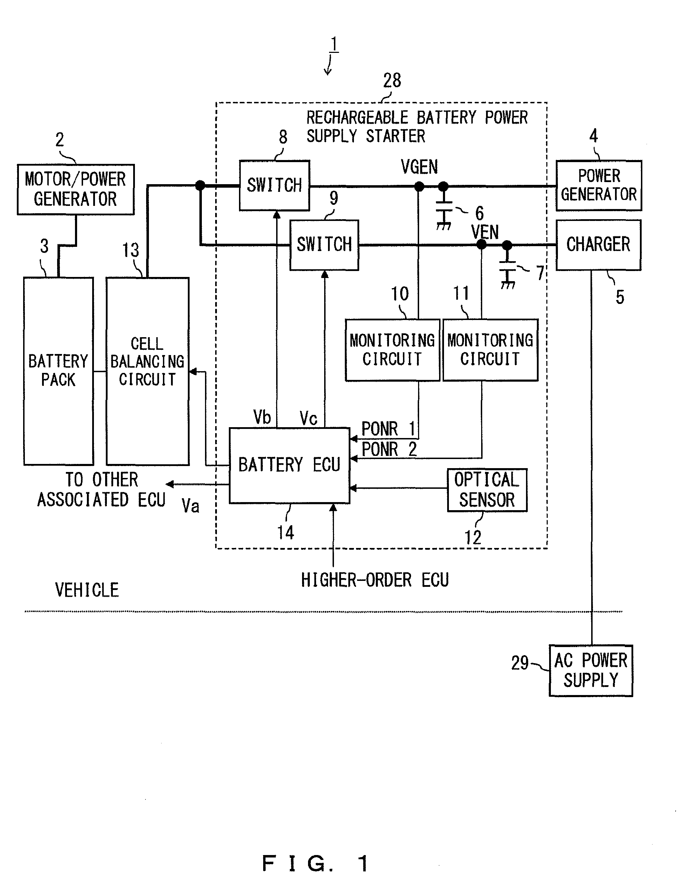

FIG. 1 is a diagram illustrating a rechargeable battery power supply starter and a cell balancing apparatus according to an embodiment of the present invention.

A cell balancing apparatus 1 of FIG. 1 includes a battery pack 3 composed of a plurality of rechargeable batteries that are serially connected to each other, a power generator 4, a charger 5, a rechargeable battery power supply starter 28, and a cell balancing circuit 13.

The rechargeable battery power supply starter 28 includes a capacitor 6 (first capacitor), a capacitor 7 (second capacitor), a switch 8 (first switch), a switch 9 (second switch), a monitoring circuit 10 (first monitoring circuit), a monitoring circuit 11 (second monitoring circuit), an optical sensor 12, and a battery ECU (Electronic Control Unit) 14 (control circuit).

The cell balancing apparatus 1 of the present embodiment is equipped, for example, in vehicles such as hybrid vehicles, plug-in hybrid vehicles, electrically powered vehicles, or forklifts. It is assumed that electric power is supplied from the battery pack 3 to the motor / power generator 2, or that regenerative electric power is supplied from the motor / power generator 2 to the battery pack 3. It is assumed that the power generator 4 is comprised, for example, of a photovoltaic power generator. It is assumed that the switches 8 and 9 are each comprised, for example, of a relay. It is assumed that the battery ECU 14 is supplied with electric power from a power supply other than the battery pack 3, for example, from an auxiliary battery.

The charger 5 transforms the electric power supplied from an AC power supply 29 located outside the vehicle into electric power suitable for the supply to the battery pack 3, where the electric power of the AC power supply 29 is more stable than the electric power of the power generator 4.

The capacitor 6 is connected to the output of the power generator 4 in parallel, and when the power generator 4 starts generating electric power and current starts flowing from the power generator 4 to the capacitor 6, the voltage VGEN applied to the capacitor 6 increases. Moreover, the capacitor 7 is connected to the output of the charger 5 in parallel, and when the charger 5 starts transforming electric power after the AC power supply 29 and the charger 5 are electrically connected to each other and current starts flowing from the charger 5 to the capacitor 7, the voltage VEN applied to the capacitor 7 increases.

The switch 8 is arranged between the power generator 4 and the cell balancing circuit 13, and is turned ON and OFF by a control signal Vb output from the battery ECU 14. When the switch 8 is turned ON, the power generator 4 and the cell balancing circuit 13 are electrically connected to each other. Moreover, the switch 9 is arranged between the charger 5 and the cell balancing circuit 13, and is turned ON and OFF by a control signal Vc output from the battery ECU 14. When the switch 9 is turned ON, the charger 5 and the cell balancing circuit 13 are electrically connected to each other.

The monitoring circuit 10 outputs a power ON reset signal PONR1 (first starter signal) to the battery ECU 14, and when the voltage VGEN of the capacitor 6 becomes equal to or larger than a threshold Vth (for example, almost the same voltage as the output voltage of the rechargeable batteries of the battery pack 3, and corresponding to the output voltage of the power generator 4 when the output of the power generator 4 is stable (for example, 12V)), the power ON reset signal PONR1 is changed from a low level to a high level. The monitoring circuit 11 outputs a power ON reset signal PONR2 (second starter signal) to the battery ECU 14, and when the voltage VEN of the capacitor 7 becomes equal to or larger than a threshold Vth, the power ON reset signal PONR2 is changed from a low level to a high level.

The optical sensor 12 detects the amount of light around the power generator 4, and outputs a signal indicating the detected amount of light to the battery ECU 14.

When the battery pack 3 is not being used, for example, when the vehicle is parked, the cell balancing circuit 13 equalizes the output voltage of each of the rechargeable batteries of the battery pack 3 by using the electric power supplied from the power generator 4 via the switch 8 or the electric power supplied from the charger 5 via the switch 9. It is assumed that when the battery pack 3 is charged, electric power is directly supplied from the charger 5 to the battery pack 3.

When an ignition signal IG output from a higher-order ECU controlling a whole vehicle is at a low level (for example, when the battery pack 3 is not being used by the motor/power generator 2) and the power ON reset signal PONR1 (or the power ON reset signal PONR2) is set from a low level to a high level, the battery ECU 14 self-starts (for example, resetting various kinds of set values required to control an operation of the cell balancing circuit 13). Moreover, the battery ECU 14 operates a timer or the like when an ignition signal IG is at a low level and the power ON reset signal PONR1 (or the power ON reset signal PONR2) is set from a low level to a high level, and after a specified period of time Ta, the battery ECU 14 outputs self-start instructions to other ECUs associated with the battery ECU 14 (for example, power management ECUs that manage the electric power required for driving of the motor/power generator 2 or the electric power regenerated from the motor/power generator 2). When an ignition signal IG is at a low level and the power ON reset signal PONR1 is set from a low level to a high level, after a specified period of time Tb (a period of time longer than a specified period of time Ta; for example, a time constant τ obtained from the capacity of the capacitor 6 or the capacity 7, or a period of time based on the time constant i) has elapsed, the battery ECU 14 turns ON the switch 8 such that the power generator 4 will supply electric power to the cell balancing circuit 13. When an ignition signal IG is at a low level and the power ON reset signal PONR2 is set from a low level to a high level, after a specified period of time Tb has elapsed, the battery ECU 14 turns ON the switch 9 such that the charger 5 will supply electric power to the cell balancing circuit 13. Then, the battery ECU 14 controls the operation of the cell balancing circuit 13 such that the output voltage of each of the rechargeable batteries of the battery pack 3 will be equalized with the electric power of the cell balancing circuit 13 supplied from the power generator 4 or the charger 5.

The battery ECU 14 may place a higher priority on the timing in which the power ON reset signal PONR2 is set from a low level to a high level than the timing in which the power ON reset signal PONR1 is set from a low level to a high level when self-starting or operating the cell balancing circuit 13.

When the amount of light detected by the optical sensor 12 does not reach a specified amount of light, the battery ECU 14 keeps the switch 8 turned OFF even if the power ON reset signal PONR1 is set from a low level to a high level. Cases in which the power ON reset signal PONR1 is set to a high level even though the amount of light detected by the optical sensor 12 does not reach a specified amount of light include, for example, cases in which current flows from the power generator 4 into the capacitor 6 due to a short circuit caused between the power generator 4 and other power supplies even though the power generator 4 is not exposed to a sufficient amount of light, as the vehicle is parked indoor or the sky is cloudy. For this reason, if the switch 8 is kept turned OFF when the amount of light detected by the optical sensor 12 does not reach a specified amount of light, it becomes possible to prevent overcurrent from flowing into the cell balancing circuit 13 or the battery pack 3 due to a circuit abnormality of the power generator 4.

As described above, the rechargeable battery power supply starter 28 according to the present embodiment is configured to turn ON the switch 8 after a voltage VGEN of the capacitor 6 becomes equal to or larger than a voltage Vth and a specified period of time Tb has elapsed. Thus, it is possible to supply stable electric power from the power generator 4 to the battery pack 3 via the cell balancing circuit 13. For this reason, even if a photovoltaic power generator whose output power is unstable is used as the power generator 4, it is still possible to supply stable electric power to the battery pack 3.

Moreover, the rechargeable battery power supply starter 28 according to the present embodiment is configured such that the battery ECU 14 will self-start when a voltage VGEN of the capacitor 6 becomes equal to or larger than a voltage Vth. Thus, compared with cases in which the battery ECU 14 is always turned ON, it becomes possible to reduce the power consumption.

Furthermore, when the amount of light detected by the optical sensor 12 does not reach a specified amount of light, the rechargeable battery power supply starter 28 according to the present embodiment keeps the switch 8 turned OFF even if the power ON reset signal PONR1 is set from a low level to a high level. Thus, it becomes possible to prevent overcurrent from flowing into the cell balancing circuit 13 due to a circuit abnormality of the power generator 4.

As the cell balancing apparatus 1 according to the present embodiment includes the cell balancing circuit 13, it becomes possible to reduce the variation of the output voltage of each of the rechargeable batteries of the battery pack 3, and thereby the life of the battery pack 3 can also be extended.

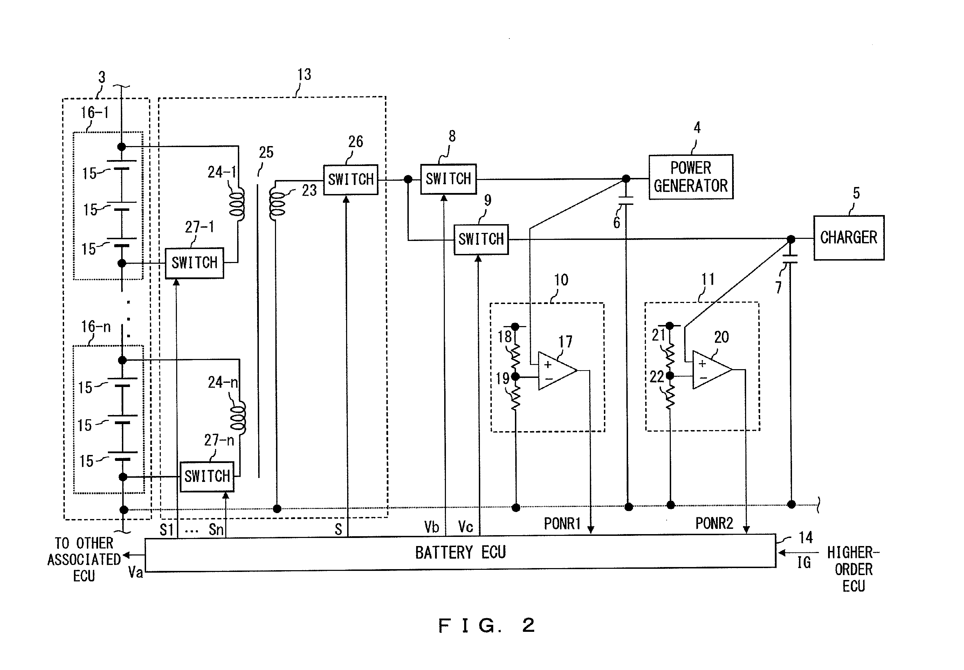

FIG. 2 is a diagram illustrating an example of the monitoring circuits 10 and 11 and the cell balancing circuit 13. Here, it is assumed that the battery pack 3 is comprised of n serially connected modules 16 (module 16-1, module 16-2, ..., module 16-n) each of which is composed of three battery cells 15 that are serially connected to each other (for example, rechargeable batteries such as lithium-ion rechargeable batteries or nickel-metal hydride secondary batteries). Note that the number of battery cells 15 that form one of the modules 16 may be one or more, and is not limited to three. The term "one rechargeable battery" in the Claims may be referred to, for example, as a module 16-1. The term "another rechargeable battery" in the Claims may be referred to, for example, as a module 16-2.

The monitoring circuit 10 of FIG. 2 includes a comparator 17 and resistors 18 and 19. The monitoring circuit 11 includes a comparator 20 and resistors 21 and 22.

In other words, a voltage VGEN of the capacitor 6 is input to the positive input terminal of the comparator 17, and a voltage Vd1 that is obtained by dividing a voltage from a specified voltage source by the resistors 18 and 19 is input to the negative input terminal of the comparator 17. Then, an output voltage of the comparator 17 is input to the battery ECU 14 as a power ON reset signal PONR1. When the voltage VGEN becomes larger than the voltage Vd1, i.e., when the voltage VGEN becomes equal to or larger than a threshold Vth, the power ON reset signal PONR1 is changed from a low level to a high level. In a similar manner to the above, a voltage VEN of the capacitor 7 is input to the positive input terminal of the comparator 20, and a voltage Vd2 that is obtained by dividing a voltage from a specified voltage source by the resistors 21 and 22 is input to the negative input terminal of the comparator 20. Then, an output voltage of the comparator 20 is input to the battery ECU 14 as a power ON reset signal PONR2. When the voltage VEN becomes larger than the voltage Vd2, i.e., when the voltage VEN becomes equal to or larger than a threshold Vth, the power ON reset signal PONR2 is set from a low level to a high level.

It is assumed that electric power is supplied to the respective comparators 17 and 20 from a power supply other than the battery pack 3, for example, from an auxiliary battery. If it is possible to set the power ON reset signal PONR1 from a low level to a high level when the voltage VGEN becomes equal to or larger than a threshold Vth, the circuit configuration of the monitoring circuit 10 is not limited. Similarly, if it is possible to set the power ON reset signal PONR2 from a low level to a high level when the voltage VEN becomes equal to or larger than a threshold Vth, the circuit configuration of the monitoring circuit 11 is not limited.

The cell balancing circuit 13 of FIG. 2 includes a transformer 25 comprised of a primary coil 23 (first coil) arranged between the switch 8 and a ground (for example, a virtual ground connected to the body of a vehicle) and n secondary coils 24 (secondary coil 24-1, secondary coil 24-2, ..., secondary coil 24-n) connected to the modules 16, a switch 26 (third switch) arranged between the switch 8 and the primary coil 23, and n switches 27 (switch 27-1, switch 27-2, ..., switch 27-n) arranged respectively between the modules 16 and the secondary coils 24. The ratio of the quantity of windings of the primary coil 23 to the total number of windings of the secondary coils 24 is, for example, 1:1. Note that "second coil" in the Claims corresponds to, for example, the secondary coil 24-1. Note that "third coil" in the Claims corresponds to, for example, the secondary coil 24-2. Note that "fourth switch" in the Claims corresponds to, for example, the switch 27-1. Note that "fifth switch" in the Claims corresponds to, for example, the switch 27-2.

The switch 26 is comprised of, for example, a MOSFET (Metal Oxide Semiconductor Field Effect Transistor), and is turned ON and OFF by a control signal S output from the battery ECU 14. The duty of the control signal S is, for example, 50%.

Each of the switches 27 is comprised of, for example, a MOSFET, and is turned ON and OFF by control signals S1-Sn output from the battery ECU 14. The duty of each of the control signals S1-Sn is, for example, 50%.

When the output voltage of each of the modules 16-1 through 16-n is equalized (self-balanced), firstly, the switch 26 is turned ON or OFF, and the switches 27-1 through 27-n are set to an always-ON state. At this time, if the switch 8 is turned ON, alternating current flows from the power generator 4 into the primary coil 23 via the switch 8, and the primary coil 23 and the secondary coils 24-1 through 24-n are electromagnetically coupled to each other. Similarly, if the switch 9 is turned ON, alternating current flows from the charger 5 into the primary coil 23 via the switch 9, and the primary coil 23 and the secondary coils 24-1 through 24-n are electromagnetically coupled to each other. At this time, if, for example, a voltage of the secondary coil 24-1 is higher than an output voltage of the module 16-1, current flows from the secondary coil 24-1 into the module 16-1, thereby charging the module 16-1.

Next, the switch 26 is turned OFF, and each of the switches 27-1 through 27-n is turned ON or OFF. Then, alternating current flows into the secondary coils 24-1 through 24-n, and the secondary coils 24-1 through 24-n are electromagnetically coupled to each other. At this time, if, for example, a voltage of the secondary coil 24-n is higher than an output voltage of the module 16-n, current flows from the secondary coil 24-n into the module 16-n, thereby charging the module 16-n. Moreover, if, for example, a voltage of the secondary coil 24-1 is lower than an output voltage of the module 16-1, current flows from the module 16-1 into the secondary coil 24-1, thereby discharging the module 16-1. Further, when an output voltage of each of the modules 16-1 through 16-n is stabilized at an average output voltage of the modules 16-1 through 16-n by a charge and discharge of each of the modules 16-1 through 16-n, i.e., when an output voltage of each the modules 16-1 through 16-n becomes almost the same level, each of the switches 27-1 through 27-n is turned OFF, and the process of self-balancing is terminated. Accordingly, it becomes possible to equalize an output voltage of each of the modules 16-1 through 16-n by using electric power supplied from the power generator 4 or the charger 5.

During the cell balancing process, the battery ECU 14 may monitor the output voltage of each of the modules 16-1 through 16-n, and the switches 27-1 through 27-n may be turned ON and OFF until the output voltage of each of the modules 16-1 through 16-n becomes lower than an upper limit Vth1 (a value larger than an average value of the output voltage of the modules 16-1 through 16-n by a specified value) and becomes higher than a lower limit Vth2 (a value smaller than an average value of the output voltage of the modules 16-1 through 16-n by a specified value).

During the cell balancing process, the switch 8 or the switch 9 may be set to an always-ON state and the switch 26 may be set to an always-ON state, and the switches 27-1 through 27-n may be respectively turned ON and OFF. At this time, as described above, alternating current flows into the respective secondary coils 24-1 through 24-n and the secondary coils 24-1 through 24-n are electromagnetically coupled to each other, and an output voltage of each of the modules 16-1 through 16-n is equalized to an average voltage by a charge and discharge of each of the modules 16-1 through 16-n. Moreover, as the primary coil 23 and the secondary coils 24-1 through 24-n are electromagnetically coupled to each other, if a voltage of the power generator 4 or the charger 5 is higher than a voltage of the primary coil 23, electric current flows from the power generator 4 or the charger 5 into the modules 16-1 through 16-n via the primary coil 23 and the secondary coils 24-1 through 24-n, thereby charging the modules 16-1 through 16-n. As a result, during the cell balancing process, it becomes possible to simultaneously increase an average voltage of the output voltage of each of the modules 16-1 through 16-n.

During the cell balancing process, electric power from the power generator 4 or the charger 5 may be sequentially supplied to the modules 16-1 through 16-n such that an output voltage of each of the modules 16-1 through 16-n will be the same voltage as a highest output voltage. For example, when an output voltage of the module 16-1 is the highest, the switch 8 or the switch 9 is set to an always-ON state and the switch 26 is turned ON and OFF, and only the switch 27-2 is set to an always-ON state to charge the module 16-2 until an output voltage of the module 16-2 becomes the same as an output voltage of the module 16-1. The other modules 16-3 through 16-n are sequentially charged in a similar manner. As a result, an output voltage of each of the modules 16-1 through 16-n will be the same voltage as a highest output voltage.

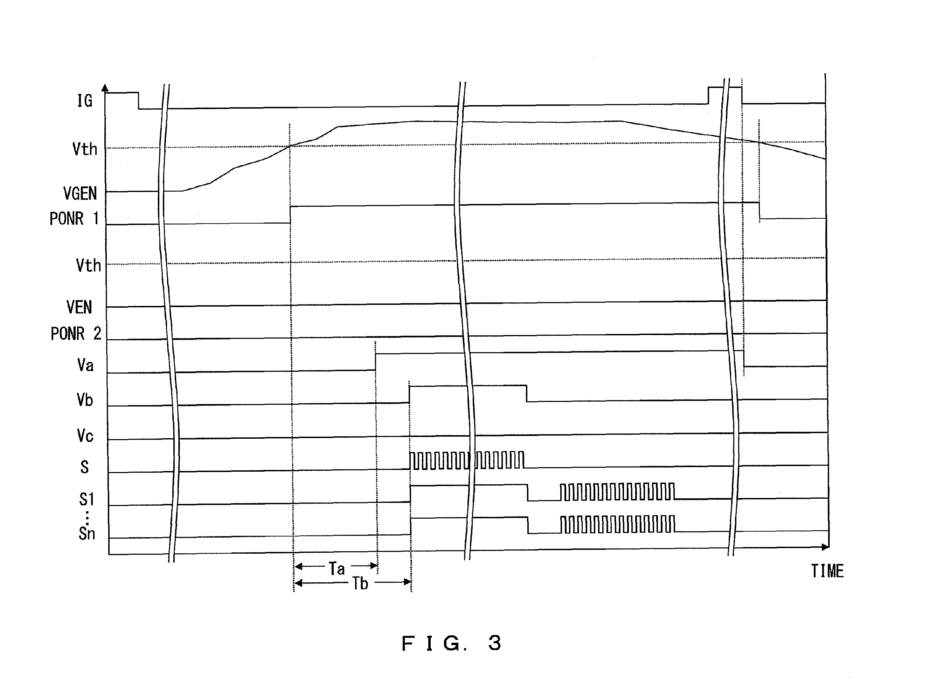

FIG. 3 is a diagram schematically illustrating an example of the ON and OFF timing chart of the respective switches 8, 9, 26, and 27-1 through 27-n. When an ignition signal IG output from a higher-order ECU that controls the whole vehicle (e.g., control of ECUs such as the battery ECU 14 or power management ECUs) is at a high level, that is, when the battery pack 3 is being used by the motor/power generator 2 while the vehicle is moving, it is assumed that the control signals Vb, Vc, S, and S1-Sn are all at a low level, and that the switches 8 and 9, 26, and 27-1 through 27-n are all set to an always-OFF state.

Firstly, the battery ECU 14 self-starts if a voltage VGEN becomes equal to or larger than a threshold Vth and a power ON reset signal PONR1 is set from a low level to a high level when an ignition signal IG is at a low level, and after a specified period of time Ta has elapsed, the battery ECU 14 sets a control signal Va from a low level to a high level to start the other ECUs associated with the battery ECU 14. Also, after a specified period of time Tb has elapsed, the battery ECU 14 sets each of the control signals Vb and S1-Sn from a low level to a high level to set each of the switches 8 and 27-1 through 27-n to an always-ON state. Moreover, the battery ECU 14 turns ON and OFF the switch 26 by using a control signal S. As a result, the modules 16-1 through 16-n are all charged. During that time, the battery ECU 14 is monitoring the output voltage of each of the modules 16-1 through 16-n.

Next, the battery ECU 14 sets each of the control signals Vb, S, and S1-Sn to a low level when each of the being-monitored output voltage of the modules 16-1 through 16-n reaches a voltage corresponding to a full charge or a specified voltage, and the charging process is terminated. The battery ECU 14 may charge the modules 16-1 through 16-n during a specified period of time.

Next, when it is determined that the being-monitored output voltages of the modules 16-1 through 16-n are dispersed, the battery ECU 14 turns ON and OFF each of the switches 27-1 through 27-n by using the respective control signal S1-Sn such that the output voltages of the modules 16-1 through 16-n will be equalized. The battery ECU 14 determines that the output voltages of the modules 16-1 through 16-n are dispersed, for example, when a difference between a largest output voltage and a smallest output voltage among the output voltages of the modules 16-1 through 16-n becomes equal to or larger than a specified value.

Then, the battery ECU 14 sets a control signal Va from a high level to a low level when an ignition signal IG is set from a high level to a low level. When a voltage VGEN becomes smaller than a threshold Vth, the power ON reset signal PONR1 is set from a high level to a low level.

As described above, the battery ECU 14 may place a higher priority on the timing at which the power ON reset signal PONR2 is set from a low level to a high level than the timing at which the power ON reset signal PONR1 is set from a low level to a high level when self-starting or operating the cell balancing circuit 13.

For example, even if the voltage VGEN becomes equal to or larger than a threshold Vth and the power ON reset signal PONR1 reaches a high level after the voltage VEN becomes equal to or larger than a threshold Vth and the power ON reset signal PONR2 reaches a high level, the battery ECU 14 sets the control signal Va from a low level to a high level when a specified period of time Ta has elapsed after a timing at which the power ON reset signal PONR2 reached a high level, and the battery ECU 14 turns ON or OFF the switch 26 after a specified period of time Tb has elapsed while setting each of the switches 8 and 27-1 through 27-n to an always-ON state.

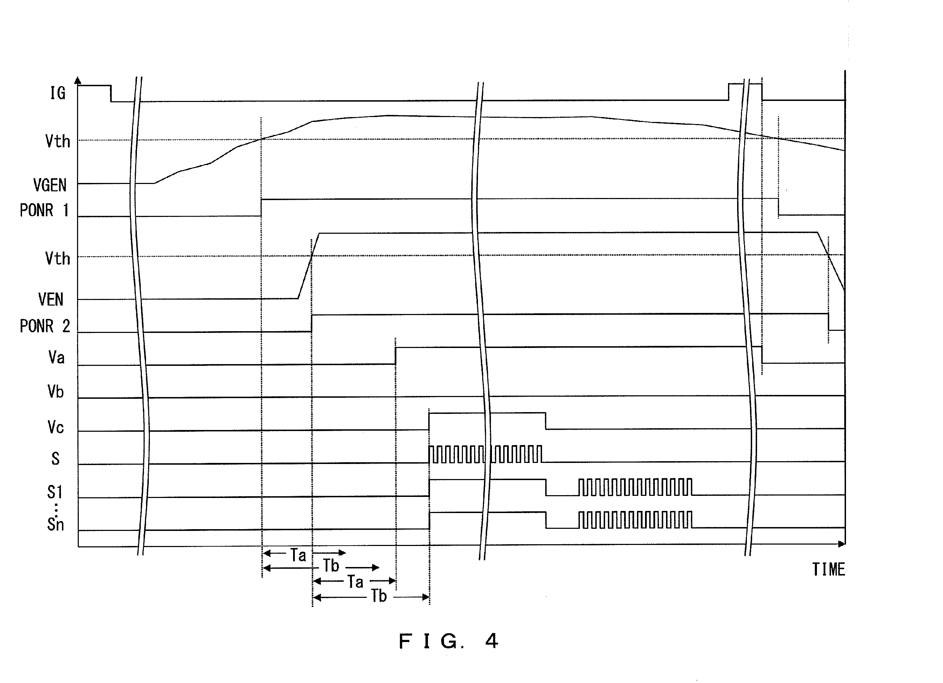

As illustrated in FIG. 4, when for example the voltage VEN becomes equal to or larger than a voltage Vth and a power ON reset signal PONR2 reaches a high level before a specified period of time Ta has elapsed after the voltage VGEN becomes equal to or larger than a voltage Vth and a power ON reset signal PONR1 reaches a high level, the battery ECU 14 sets the control signal Va from a low level to a high level when a specified period of time Ta has elapsed after the power ON reset signal PONR2 reaches a high level, and the battery ECU 14 turns ON or OFF the switch 26 after a specified period of time Tb has elapsed while setting each of the switches 8 and 27-1 through 27-n to an always-ON state.

As a result, it becomes possible to supply electric power from the charger 5 to the battery pack 3 that is more stable than the electric power supplied from the power generator 4, via the cell balancing circuit 13.

The above-described embodiment is configured such that the power ON reset signal PONR1 (or the power ON reset signal PONR2) will be set from a low level to a high level when a voltage VGEN (or a voltage VEN) becomes equal to or larger than a threshold Vth. However, the circuit configuration of the monitoring circuit 10 (or a charger starter circuit 11) may be changed such that the power ON reset signal PONR1 (or the power ON reset signal PONR2) will be set from a high level to a low level when a voltage VGEN (or a voltage VEN) becomes equal to or larger than a threshold Vth. In such cases, it is configured such that the battery ECU 14 will self-start when the power ON reset signal PONR1 (or the power ON reset signal PONR2) is set from a high level to a low level, and such that a control signal Va will be at a high level when a specified period of time Ta has elapsed and a control signal Vb will be at a high level when a specified period of time Tb has elapsed.

According to the present invention, when electric power is supplied to a rechargeable battery using a power generator whose output is unstable, it is possible to supply stable electric power to a rechargeable battery.
When a voltage applied to a first capacitor (6) connected to an output of a power generator (4) in parallel is equal to or larger than a threshold, a starter signal output from a monitoring circuit (10) to a control circuit (14) is set from a low level to a high level. The control circuit (14) self-starts, and a first switch (8) arranged between the power generator (4) and a cell balancing circuit (13) is turned ON. Electric power for equalizing an output voltage of each of a plurality of rechargeable batteries of a battery pack (3) is supplied from the power generator (4) to the battery pack (3) via the cell balancing circuit (13).

## Claims

1. A rechargeable battery power supply starter (28) which controls a power generator (4) to supply electric power to a cell balancing circuit (13) used to equalize an output voltage of each of a plurality of rechargeable batteries (16-1 through 16-n, 15) provided for a battery pack (3), the rechargeable battery power supply starter (28) comprising:
a first capacitor (6) connected to an output of the power generator (4) in parallel;
a first switch (8) arranged between the power generator (4) and the cell balancing circuit (13);
a first monitoring circuit (10) to output a first starter signal when a voltage applied to the first capacitor (6) is equal to or larger than a threshold; and
a control circuit (14) to control the first switch (8) to turn ON and OFF,
wherein
the control circuit (14) self-starts upon receiving the first starter signal to turn on the first switch (8), and controls the power generator (4) to supply electric power to be used by the cell balancing circuit (13) for equalizing an output voltage of each of the plurality of rechargeable batteries (16-1 through 16-n, 15).

2. The rechargeable battery power supply starter (28) according to claim 1, further comprising
an optical sensor (12) to detect an amount of light around the power generator (4) which is a photovoltaic power generator,
wherein
the control circuit (14) receives the first starter signal, and when the amount of light detected by the optical sensor (12) is equal to or larger than a specified amount of light, self-starts to turn ON the first switch (8).

3. The rechargeable battery power supply starter (28) according to claim 1 or 2, wherein
the control circuit (14) self-starts upon receiving the first starter signal, and after a specified period of time has elapsed, turns ON the first switch (8).

4. The rechargeable battery power supply starter (28) according to claim 1, further comprising:
a second capacitor (7) connected to an output of a charger (5) in parallel;
a second switch (9) arranged between the charger (5) and the battery pack (3); and
a second monitoring circuit (11) to output a second starter signal when a voltage applied to the second capacitor (7) is equal to or larger than the threshold,
wherein
the rechargeable battery power supply starter (28) controls the charger (5) which transforms electric power of a power supply (29) whose output is more stable than that of the power generator (4) into electric power for charging the battery pack (3), to supply electric power, and
the control circuit (14) self-starts upon receiving the first starter signal and the second starter signal to turn on the second switch (9), and controls the charger (5) to supply electric power to be used by the cell balancing circuit (13) for equalizing an output voltage of each of the plurality of rechargeable batteries (16-1 through 16-n, 15).

5. A cell balancing apparatus (1) comprising:
a power generator (4);
a first capacitor (6) connected to an output of the power generator (4) in parallel;
a cell balancing circuit (13) which is arranged between the power generator (4) and a battery pack (3) including a plurality of rechargeable batteries (16-1 through 16-n, 15), to equalize an output voltage of each of the plurality of rechargeable batteries (16-1 through 16-n, 15) by using electric power supplied from the power generator (4);
a first switch (8) arranged between the power generator (4) and the cell balancing circuit (13);
a first monitoring circuit (10) to output a first starter signal when a voltage applied to the first capacitor (6) is equal to or larger than a threshold; and
a control circuit (14) to control the first switch (8) to turn ON and OFF, and to control an operation of the cell balancing circuit (13),
wherein
the control circuit (14) self-starts upon receiving the first starter signal to turn on the first switch (8), and controls the power generator (4) to supply electric power to the cell balancing circuit (13).

6. The cell balancing apparatus (1) according to claim 5, wherein
the cell balancing circuit (13) comprises:
a transformer (25) including a first coil (23), a second coil (24-1) connected to a single rechargeable battery (16-1, 15) out of the plurality of rechargeable batteries, and a third coil (24-2) connected to another single rechargeable battery (16-2, 15) other than the single rechargeable battery out of the plurality of rechargeable batteries;
a third switch (26) arranged between the first switch (8) and the first coil (23);
a fourth switch (27-1) arranged between the second coil (24-1) and the single rechargeable battery (16-1, 15); and
a fifth switch (27-2) arranged between the third coil (24-2) and the other single rechargeable battery (16-2, 15), and
during a cell balancing process, the control circuit (14) sets each of the first, fourth, and fifth switches (8, 27-1, 27-2) to an always-ON state and turns ON and OFF the third switch (26), thereby electromagnetically coupling the first through third coils (23, 24-1, 24-2) to each other, and then sets the first switch (8) to an always-OFF state and turns ON and OFF the fourth and fifth switches (27-1, 27-2), thereby electromagnetically coupling the second and third coils (24-1, 24-2) to each other.
